Europäisches Patentamt

European Patent Office

Office européen des brevets

(19)

(11) Veröffentlichungsnummer: **0 309 687**

**A1**

(12) # EUROPÄISCHE PATENTANMELDUNG

(21) Anmeldenummer: 88112665.0

(51) Int. Cl.⁴: **H04N 5/63**

(22) Anmeldetag: 04.08.88

Die Bezeichnung der Erfindung wurde geändert (Richtlinien für die Prüfung im EPA, A-III, 7.3).

(30) Priorität: 30.09.87 DE 3733010

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Dieterle, Franz**
**Sommerauerstrasse 31**
**D-7742 St. Georgen(DE)**
Erfinder: **Mai, Udo**
**Mühleschweg 2**
**D-7730 VS-Villingen 23(DE)**
Erfinder: **Hartmann, Uwe**
**Tallardstrase 15**
**D-7730 Villingen-Schwenningen(DE)**

(54) **Stand-by-Betrieb in Verbindung mit getakteter Vertikalendstufe.**

(57) Im stand-by-Betrieb bleiben die Ansteuerimpulse für die Vertikalstufe aus. Die Versorgungsspannungen ($U_s$) werden durch Rücklaufgleichrichtung erzeugt und sind deshalb klein. Beim Einschalten des Empfängers entstehen Ansteuerimpulse für die Vertikalstufe. Es erfolgt eine Hinlaufgleichrichtung der Betriebsspannungen ($U_t$) mit Nominalwert. Der Bedienteilprozessor (14) wird im stand-by-Betrieb aus der unbelasteten Betriebsspannung ($U_{ton}$) für die Tonstufe versorgt.

## Schaltungsanordnung für Fernsehempfänger mit einem geregelten Schaltnetzteil

Die Erfindung betrifft eine Schaltungsanordnung für Fernsehempfänger mit einem geregelten Schaltnetzteil und einer getakteten Vertikal-Endstufe.

Fernsehempfänger besitzen eine Schaltungsanordnung für den sogenannten stand-by-Betrieb, mit welcher der Empfänger zwecks fernbedienbarer Einschaltung mit geringer Leistung betriebsbereit gehalten wird. Man ist dabei bestrebt, die Kosten für eine derartige Bereitschaftsschaltung und auch die dafür bereitzustellende Leistung so gering wie möglich zu halten.

Der Erfindung liegt die Aufgabe zugrunde, eine besonders preiswerte stand-by-Schaltung in Verbindung mit einer getakteten Vertikalablenkschaltung in einem Fernsehempfänger zu erhalten. Diese Aufgabe wird durch die im Patentanspruch gekennzeichnete Maßnahme gelöst.

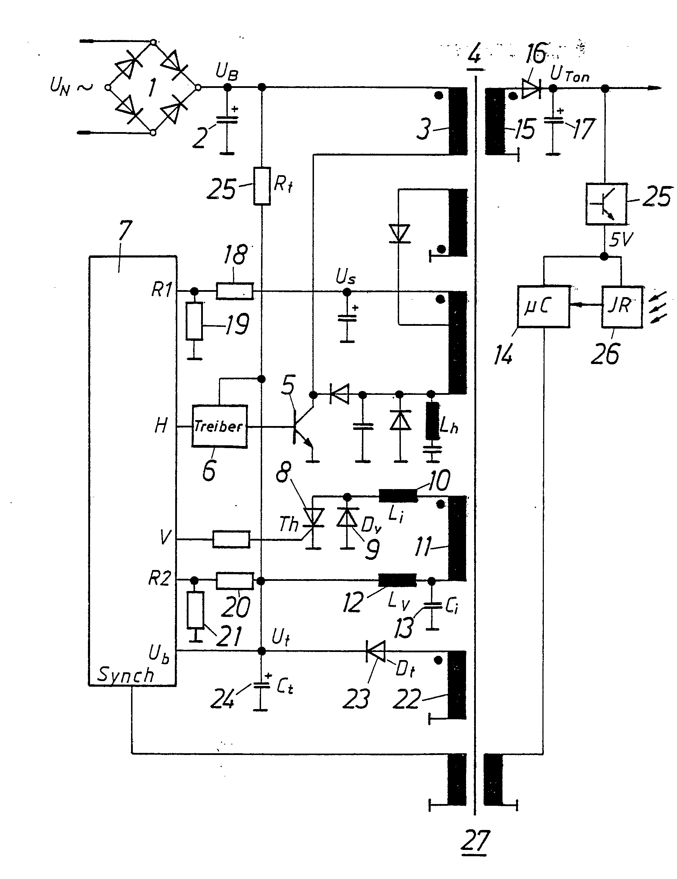

Nachstehend wird die Erfindung an einem Ausführungsbeispiel mit Hilfe der Zeichnung erläutert.

Die Figur zeigt den prinzipiellen Aufbau der gesamten Primärseite sowie eines Teils der netzgetrennten Sekundärseite des Chassis eines Fernsehempfängers. Die mit dem Netz verbundene Seite beinhaltet die Kombination von Schaltnetzteil und Horizontalablenkschaltung, die unter dem Begriff Wessel-Schaltung bekannt ist. Die Netzwechselspannung UN wird von dem Brückengleichrichter 1 zu einer ungeregelten Gleichspannung UB am Kondensator 2 gleichgerichtet. Diese Spannung UB ist über die Primärwicklung 3 eines zeilentransformators 4 an einen elektronischen Schalter 5 gelegt, der diese Wicklung periodisch nach Masse schaltet. Der Schalter 5 wird von der Treiberstufe 6 angesteuert, die von einer Steuerschaltung 7 durch in ihrer Breite modulierte zeilenfrequente Impulse angesteuert wird. Die Breite der Impulse ist von der Belastung des Zeilentransformators abhängig. Die Steuerschaltung 7 gibt außerdem noch Ansteuerimpulse für die Vertikalablenkschaltung ab, die aus dem Thyristor 8, der Diode 9, der Integrationsspule 10, der Sekundärwicklung 11, der Ablenkwicklung 12 und dem Integrationskondensator 13 besteht. Am Integrationskondensator 13 werden die zeilenfrequenten Impulse zu bildfrequenten Impulsen umgeformt. Auf der vom Netz getrennten Seite ist nur der Bedienteilprozessor 14 gezeichnet. Er wird versorgt aus der Sekundärwicklung 15 für die Tonendstufe über die Diode 16 und den Kondensator 17. Die getaktete Vertikalendstufe wird in vorteilhafterweise für den stand-by-Betrieb ausgenutzt. Dabei wird nicht, wie üblich das Gerät durch Umschaltung eines Regelsollwertes vom stand-by-Betrieb in den Normalbetrieb geschaltet, sondern durch das Anlegen des Ansteuersignals an die Vertikalendstufe. Die Ansteuersignale werden durch die Steuerschaltung 7 in Form eines integrierten Schaltkreises erzeugt, der zwei Regeleingänge R1 und R2 besitzt, von denen immer nur derjenige zur Wirkung kommt, an welchem die höhere Regelspannung liegt. Der Spannungsteiler 18, 19 am Eingang R1 wird dabei so dimensioniert, daß bei niedrigerer Regelspannung am Regeleingang R2 die Systemspannung Us auf 100 % geregelt wird. Ist dagegen die Spannung am Regeleingang R2 höher als am Regeleingang R1, so soll die am Spannungsteiler 20, 21 liegende Treiberspannung Ut 120 % der Sollspannung betragen, die entsteht, wenn diese durch den Regeleingang R1 geregelt wird. Die Treiberspannung Ut für die Treiberstufe 6 wird durch die Sekundärwicklung 22 über die Diode 23 am Kondensator 24 erzeugt.

Wird das Gerät mit dem Netz UN verbunden, so gelangt über den Widerstand 25 eine Starspannung an die Treiberstufe 6 und an die Steuerschaltung 7. Das Schaltnetzteil und die Horizontal ablenkung werden in Betrieb gesetzt. Die Vertikalablenkung bleibt noch außer Betrieb. Die Wicklung 15 für die Tonendstufe ist in Vorwärtsbetrieb geschaltet. Wie bei einem 5o-Hz-Transformator entsteht eine der Netzwechselspannung proportionale Spannung Ut. Im stand-by-Betrieb ist diese Spannung Ut vorhanden, was aber nicht nachteilig ist, weil die Tonendstufe ohne Ansteuerung keine Leistung verbraucht. Über einen Spannungsregler 25 wird eine stabile stand-by-Spannung erzeugt, die den Bedienteilprozessor 14 sowie den Infrarotempfänger 26 zum Empfang von Fernsteuersignalen versorgt. Der Schaltkreis auf der Primärseite erhält nun vom Bedienteil Über ein vorhandenes oder fehlendes Synchronsignal über den Koppeltransformator 27 die Information zum Ein- oder Ausschalten des Gerätes.

Fehlt der Steuerschaltung 7 die Einschaltinformation, so wird die Vertikalendstufe 5 nicht gezündet. über die Diode 9 wird die Spannung an der Wicklung 11 des Transformators 4 gleichgerichtet und es entsteht an den Kondensatoren 13 und 24 die Spannung Ut, die zur Versorgung der Steuerschaltung 7 und Treiberschaltung 6 benutzt wird. Da diese Spannung durch Rücklaufgleichrichtung erzeugt wird, liegt die Systemspannung Us weit unter ihrem Sollwert. Der Regeleingang R1 wird somit zur Regelung nicht herangezogen. Über den Regeleingang R2 wird die Spannung Ut auf einem um 20% höheren Wert als bei eingeschaltetem Gerät gehalten. Sämtliche anderen durch Hinlaufgleichrichtung erzeugten Spannungen bleiben auf 10% ihres Sollwertes.

Durch einen Einschaltbefehl gibt die Steuerschaltung 7 die Ansteuerung des Thyristors 5 frei. Die Spannung Ut wird nun durch Hinlaufgleichrichtung über die Diode 23 erzeugt. Die Regelung über den Regeleingang R1 verhindert ein Ansteigen der Spannung Us von 20% über ihren Sollwert. Durch die Regelung sinkt die Spannung Ut auf ihren Wert von 100%. Dadurch ist die Spannung am - Regeleingang R2 immer kleiner als am Regeleingang R1. Das Empfangsgerät befindet sich im Normalbetrieb.

Beim Abschalten des Gerätes übermittelt der Bedienteilprozessor 14 durch Fehlen der Synchronansteuerung für die Steuereinheit 7 die Umschaltung auf den stand-by-Betrieb. Durch Sperren des Thyristors 8 wird die Spannung Ut durch Rücklaufgleichrichtung erzeugt. Die Spannung am Regeleingang R2 steigt über den Wert am Regeleingang R1 an, so daß sämtliche anderen Spannungen auf ihren geringen stand-by-Wert absinken.

Die Erfindung bringt den Vorteil, daß z.B. ein teurer 50-Hz-stand-by-Transformator entfallen kann. Er wird durch die ohnehin vorhandene Tonwicklung 15 auf dem Transformator 4 ersetzt. Im stand-by-Betrieb sind die Spannungen auf der Sekundärseite des Transformators 4 so klein, daß sie nicht noch zusätzlich abgeschaltet werden müssen. Bei 10% von der Sollspannung ist die stand-by-Leistung nur 1% der im Normalbetrieb aufgenommenen Leistung.

## Ansprüche

1. Schaltungsanordnung für Fernsehempfänger mit einem geregelten Schaltnetzteil und einer getakteten Vertikal-Endstufe sowie einem Bedienteilprozessor, dadurch gekennzeichnet, daß für den stand-by-Betrieb bei fehlenden Ansteuerimpulsen für die Vertikal-Endstufe die Versorgungsspannungen durch Rücklaufgleichrichtung erzeugt werden, und daß bei Vorliegen eines Einschaltbefehls und damit einer Ansteuerung der Vertikal-Endstufe die Betriebsspannungen durch Hinlaufgleichrichtung erzeugt werden.

2. Schaltungsanordnung nach Anspruch 1, dadurch gekennzeichnet, daß die Betriebsspannung für den Bedienteilprozessor von der durch Hinlaufgleichrichtung gewonnenen Betriebsspannung für die Tonstufe des Fernsehempfängers abgeleitet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 605 345 (DEUTSCHE THOMSON-BRANDT) <br> * Seite 3, Zeile 18 - Seite 6, Zeile 21; Figur 2 * <br> --- | 1 | H 04 N 5/63 |
| A | EP-A-0 055 152 (THOMSON-BRANDT) <br> * Seite 1, Zeile 17 - Seite 3, Zeile 2; Figur 1 * <br> --- | 1 | |
| A | DE-A-3 206 009 (LOEWE OPTA) <br> * Seite 10, Zeile 14 - Seite 12, Zeile 9; Figur 1 * <br> ----- | 2 | |

RECHERCHIERTE
SACHGEBIETE (Int. Cl.4)

H 04 N 3
H 04 N 5

Der vorliegende Recherchenbericht wurde für alle Patentansprüche erstellt

| Recherchenort | Abschlußdatum der Recherche | Prüfer |
|---|---|---|
| DEN HAAG | 26-09-1988 | DUHR R.H.J.E. |